# NEW EUROPEAN PATENT SPECIFICATION

(11) **EP 3 418 261 B2**
(45) Date of publication and mention of the opposition decision: **18.11.2026**
(45) Mention of the grant of the patent: 29.05.2024
(21) Application number: 16890656.8
(22) Date of filing: 28.11.2016
(51) Int. Cl.: C03C 17/34, C03C 17/38, F24C 15/10

(54) **HEAT-RESISTANT GLASS**
HITZEBESTÄNDIGES GLAS
VERRE RÉSISTANT À LA CHALEUR

(30) Priority: 17.02.2016 JP 2016028017
(43) Date of publication of application: 26.12.2018
(73) Proprietor: Nippon Electric Glass Co., Ltd., Otsu-shi, Shiga 520-8639 (JP)
(72) Inventor: KANAZAWA, Toshiaki, Otsu-shi Shiga 520-8639 (JP); YOKOYAMA, Shohei, Otsu-shi Shiga 520-8639 (JP); KONISHI, Hirotugu, Otsu-shi Shiga 520-8639 (JP)
(74) Representative: Tetzner, Michael
(86) International application number: PCT/JP2016/085123
(87) International publication number: WO 2017/141519

(56) References cited:
- EP-A1- 0 480 889
- EP-B1- 2 243 752
- WO-A1-2013/015056
- WO-A1-2013/156622
- WO-A1-2014/137058
- JP-A- 2011 011 953
- JP-A- H10 273 342
- JP-A- S5 537 421
- JP-A- S54 149 721
- JP-U- 3 131 579
- JP-U- 3 201 686
- JP-U- 3 201 686
- US-A1- 2008 190 409
- US-A1- 2012 295 081
- US-A1- 2014 144 684
- US-A1- 2015 037 539
- US-B1- 6 525 300
- US-B2- 9 006 620
- "BASICS3- Siebdruckgewebe", PACO, vol. 11, no. 12, XP093264715, Retrieved from the Internet <URL:https://www.lochblech.ch/wp-content/uploads/2018/01/PACO_Basics3_12_seitig_dt_web.pdf> DOI: 10.1128/mra.00829-22
- WEBSITE ZUM DOWNLOAD VON D9
- "Technische Liste Haver Metall Gaze für den Siebdruck (Rev. 07)", HAVER & BOECKER, DRAHTWEBEREI UND MASCHINENFABRIK, XP093264722, Retrieved from the Internet <URL:https://www.haverboecker.com/fileadmin/HaverBoecker/DieDrahtweber/03_documents/01_pdf/Siebdruckgewebe/Siebdruck-Technische-Liste_de.pdf>
- "Printing Solutions - SEFAR PET 1500", SEFAR, vol. 15, no. 4, XP093264725, Retrieved from the Internet <URL:https://www.mciprecisionscreens.com/wp-content/uploads/2019/10/SEFAR_PET_1500_datasheet.pdf> DOI: 10.1002/wsbm.1608
- Pattern, Wikipedia
- Pattern, The Open Dictionary
- Pattern, Longman Dictionary of Contemporary English
- Fine Wiring Printing Solution, Seria Corporation, https://www.seria.co.ip/solution fine line printing.php?ln=en
- Osaka Prefecture and others succeeded in creating 10μm wire width wiring with screen printing method, Nikkei Cross-TECH, published on September 12, 2008, machine translation of https://xtech.nikkei.com/dm/article/NEWS/20080912/157921/

## Description

### [Technical Field]

The present invention relates to heat-resistant glasses that can be used as top plates for cookers, window glasses for burning equipment, and so on.

### [Background Art]

A thermally resistant glass substrate made of crystallized glass, borosilicate glass or the like having a low coefficient of thermal expansion is used as a top plate for a cooker, such as an electromagnetic cooker, a radiant heater cooking device or a gas cooker. In using a transparent glass substrate as a glass substrate, a metallic luster layer or a coating film layer is generally formed on the underside of the glass substrate located on the side thereof closer to the interior of a cooker in order to hide the internal structure of the cooker.

For example, JP 2006 40815 A discloses, as a method for giving a top plate for a cooker a pearl-like gloss, a method of applying a coloring paste containing a pearlescent pigment to the underside of a glass substrate and then applying a luster paste on the coloring paste.

Recently, top plates for cookers are increasingly diversifying in color and design. For example, there is demand for wood-grain top plates for cookers. JP 2008 161252 A proposes, as a method for forming a design layer, such as a wood grain pattern, on a top board for a kitchen counter, a method of transferring a design layer from a transfer paper to a resin substrate.

EP 0 480 889 A1 discloses a patterned plate glass comprising a glass substrate having a thin layer of a clear epoxy resin having a pattern on a surface of the glass substrate, and a coating colored film applied on the pattern. US 2015/037539 A1 discloses a glass or glass ceramic substrate that has a decorative coating, the coating comprising a textured layer which is filled with a further layer. US 2014/370208 A1 discloses coated articles including substrates that support printed patterns. US 2012/207951 A1 discloses substrates having laser-fused frits, wherein a pattern is formed or written on a stock glass sheet by laser fusing frit material to the glass sheet, and an optional thin film coating is disposed on and supported by the stock glass sheet.

### [Summary of Invention]

### [Technical Problem]

However, in the method using a transfer paper, it is not only difficult to obtain a sufficient thermal resistance but it is also difficult to obtain a pattern, such a wood grain pattern, with depth and texture.

An object of the present invention is to provide a heat-resistant glass which has a thermal resistance enabling the use thereof as a top plate for a cooker and on which a pattern with depth and texture can be formed.

### [Solution to Problem]

The present invention provides a heat-resistant glass according to claim 1, a top plate of a cooker according to claim 2, and a use of the heat-restistant glass according to claim 3.

In the present invention, a specific example of the pattern includes a hairline pattern.

### [Advantageous Effects of Invention]

The present invention enables the provision of a heat-resistant glass which has a thermal resistance enabling the use thereof as a top plate for a cooker and on which a pattern with depth and texture can be formed.

### [Brief Description of Drawings]

[Fig. 1]

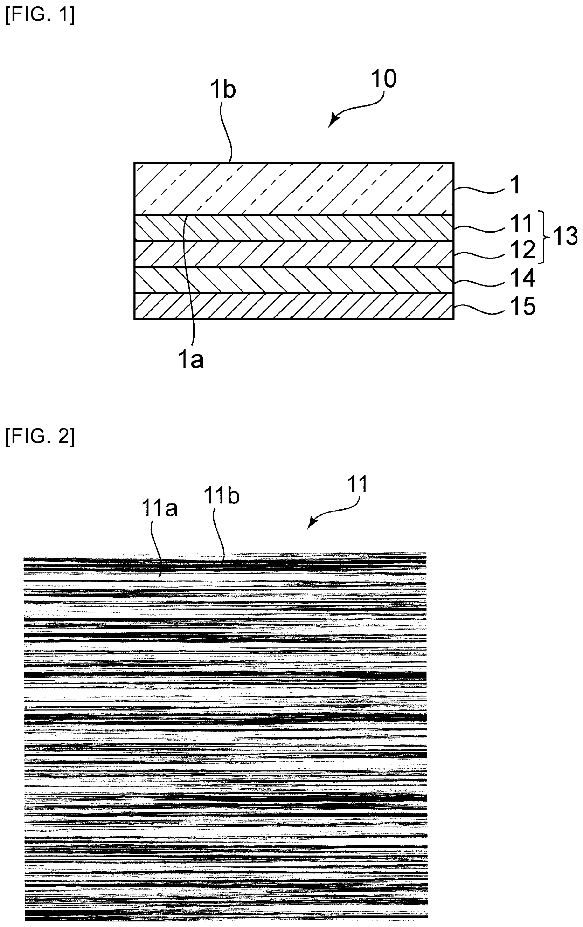

   Fig. 1 is a schematic cross-sectional view showing a heat-resistant glass according to a first embodiment not according to the present invention.
[Fig. 2]
   Fig. 2 is a plan view showing a wood grain pattern in the first embodiment not according to the present invention.
[Fig. 3]

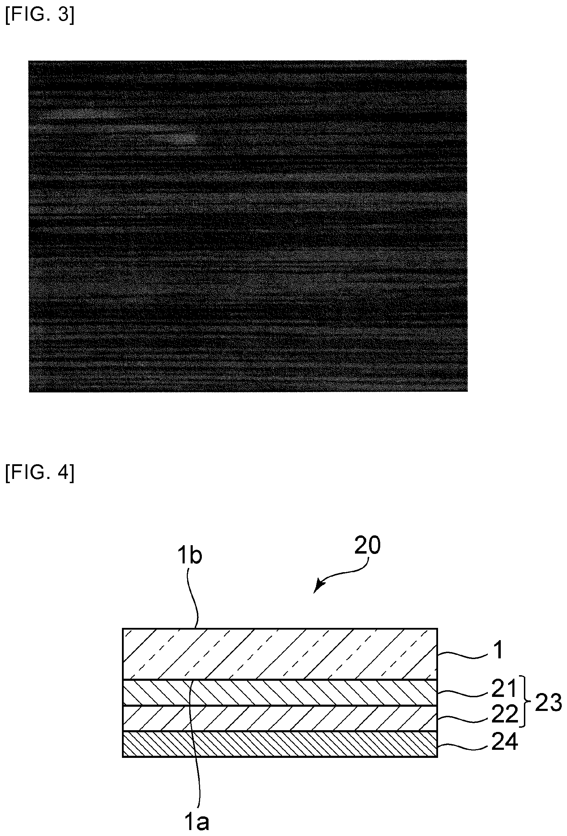

   Fig. 3 is a photograph showing the wood grain pattern of the heat-resistant glass according to the first embodiment not according to the present invention.
[Fig. 4]
   Fig. 4 is a schematic cross-sectional view showing a heat-resistant glass according to a second embodiment not according to the present invention.
[Fig. 5]

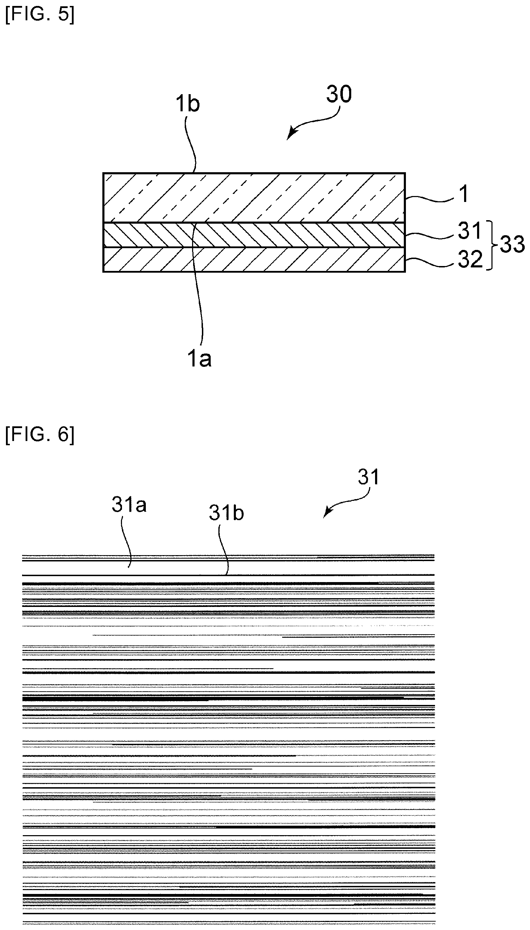

   Fig. 5 is a schematic cross-sectional view showing a heat-resistant glass according to a third embodiment of the present invention.
[Fig. 6]
   Fig. 6 is a plan view showing a hairline pattern in the third embodiment of the present invention.
[Fig. 7]

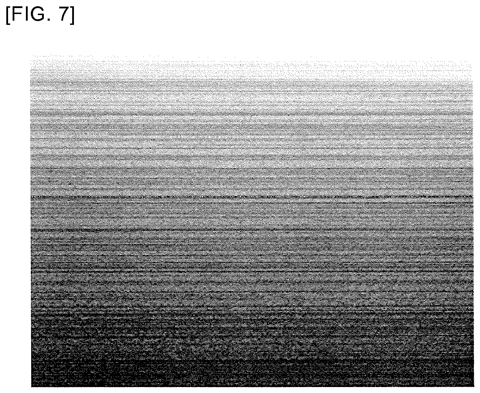

   Fig. 7 is a photograph showing the hairline pattern of the heat-resistant glass according to the third embodiment of the present invention.

### [Description of Embodiments]

Hereinafter, a description will be given of preferred embodiments. However, the following embodiments are merely illustrative and the present invention is not limited to the following embodiments. Throughout the drawings, members having substantially the same functions may be referred to by the same reference characters.

### (First Embodiment)

### (First Embodiment not according to the present invention)

Fig. 1 is a schematic cross-sectional view showing a heat-resistant glass according to a first embodiment. The heat-resistant glass 10 according to this embodiment includes a transparent glass substrate 1 and a design layer 13 provided on one principal surface 1a of both the principal surfaces of the transparent glass substrate 1. The design layer 13 includes a first layer 11 provided on the one principal surface 1a of the transparent glass substrate 1 and a second layer 12 provided to cover the first layer 11. The design layer 13 has a pattern visible when viewed through the other principal surface 1b of the transparent glass substrate 1. The pattern of the design layer 13 in this embodiment is a wood grain pattern.

Fig. 2 is a plan view showing the wood grain pattern of the first layer 11 in the first embodiment. As shown in Fig. 2, in the first layer 11, sparse regions 11a and dense regions 11b are formed according to the wood grain pattern in this embodiment. In this embodiment, the sparse regions 11a are regions free from a film forming the first layer 11. Therefore, the sparse regions 11a in this embodiment are regions where the thickness of the film is substantially zero. On the other hand, the dense regions 11b in this embodiment are regions where the film forming the first layer 11 is provided. In the dense regions 11b, the thickness of the film may vary depending on the pattern of the design layer 13 or may be substantially uniform.

The thickness of the film in the dense regions 11b is, for example, preferably within a range of 1 to 10 µm and more preferably within a range of 3 to 7 µm. Within the above ranges, a pattern with depth and texture can be more easily formed. The width of the sparse regions 11a and the dense regions 11b (the width thereof in a direction perpendicular to both of a direction of film thickness and a direction of extension of wood grain) is, for example, preferably within a range of 0.001 mm to 5 mm and more preferably within a range of 0.15 mm to 2.5 mm. Within the above ranges, a pattern with depth and texture can be more easily formed.

In this embodiment, the second layer 12 is provided uniformly to cover the whole of the first layer 11. Therefore, if the second layer 12 is formed of a coating film, it can be formed as a so-called solid-color coating film. Since the sparse regions 11a of the first layer 11 are free from the film forming the first layer 11, the film of the second layer 12 can be seen directly. The thickness of the second layer 12 is, for example, preferably within a range of 1 to 10 µm and more preferably within a range of 3 to 7 µm. Within the above ranges, a pattern with depth and texture can be more easily formed.

In this embodiment, the first layer 11 and the second layer 12 preferably have different hues or shades of the same color. In the case of wood grain patterns, the first layer 11 and the second layer 12 preferably have different hues or shades of brown. The color difference ΔE between the first layer 11 and the second layer 12 is preferably within a range of 2 to 20 and more preferably within a range of 5 to 15. Within the above ranges, a pattern with depth and texture can be more easily formed. In this embodiment, the color difference ΔE between the first layer 11 and the second layer 12 is 6. In the case of wood grain patterns, generally, the color of the second layer 12 to be selected is paler than that of the first layer 11. In measuring the color difference ΔE, as for the first layer 11, a solid-color coating film made of the film forming the first layer 11 is produced as a sample coating film for measurement and the color of the sample coating film is measured.

As shown in Fig. 1, in this embodiment, a first coating layer 14 is provided on the design layer 13 composed of the first layer 11 and the second layer 12 and a second coating layer 15 is provided on the first coating layer 14. The first coating layer 14 and the second coating layer 15 are provided in order to Increase the hideability and further improve the depth and texture of the pattern. In this embodiment, the first coating layer 14 is formed of a white coating film and the second coating layer 15 is formed of a gray coating film.

The transparent glass substrate 1 is preferably a glass plate having excellent thermal resistance and a low coefficient of thermal expansion. Specifically, the softening temperature of the transparent glass substrate 1 is preferably 700°C or more and more preferably 750°C or more. Furthermore, the average coefficient of linear thermal expansion of the transparent glass substrate 1 at 30°C to 750°C is preferably within a range of -10 × 10⁻⁷/°C to +30 × 10⁻⁷/°C and more preferably -10 × 10⁻⁷/°C to +20 × 10⁻⁷/°C. Therefore, the transparent glass substrate 1 is preferably a glass, a crystallized glass or a tempered glass that have a high glass transition temperature and a low coefficient of thermal expansion. A specific example of the crystallized glass having a high glass transition temperature and a low coefficient of thermal expansion is N-0 manufactured by Nippon Electric Glass Co., Ltd.

In this embodiment, the first layer 11 and the second layer 12 contain an inorganic pigment and glass. Examples of the inorganic pigment Include, besides TiO₂, ZrO₂, and ZrSiO₄, Co-Al-Zn-based Inorganic pigments, Co-Al-Si-based Inorganic pigments, Co-Al-Ti-based inorganic pigments, Co-Al-Cr-based inorganic pigments, Co-Ni-Ti-Zn-based inorganic pigments, Ti-Sb-Cr-based inorganic pigments, Ti-Ni-based inorganic pigments, Co-SI-based inorganic pigments, TI-Fe-Zn-based Inorganic pigments, Fe-Zn-based inorganic pigments, Fe-NI-Cr-based inorganic pigments, Fe-Co-Cr-based Inorganic pigments, Zn-Fe-Cr-Al-based inorganic pigments, Co-Cr-Fe-based Inorganic pigments, Cu-Cr-based Inorganic pigments, Cu-Cr-Fe-based inorganic pigments, and Cu-Cr-Mn-based inorganic pigments and these inorganic pigments can be used as a single pigment or a mixture. Alternatively, a metallic pigment, such as aluminum pigment, can also be used. In the first layer 11 and the second layer 12, the inorganic pigment is preferably dispersed in a glass matrix serving as a binder. Examples of the glass that can be used as a component of the glass matrix Include B₂O₃-SiO₂-based glasses, Na₂O-CaO-SiO₂-based glasses, Li₂O-Al₂O₃-SiO₂-based glasses, and ZnO-Al₂O₃-P₂O₅-based glasses.

The content of the inorganic pigment in the first layer 11 and the second layer 12 is preferably within a range of 10% by mass to 90% by mass and more preferably within a range of 30% by mass to 70% by mass. Therefore, the content of the glass in the first layer 11 and the second layer 12 is preferably within a range of 10% by mass to 90% by mass and more preferably within a range of 30% by mass to 70% by mass. If the content of the inorganic pigment in the first layer 11 and the second layer 12 is too small, the required colorability may not be able to be achieved. On the other hand, if the content of the inorganic pigment is too large, the content of the glass relatively decreases, so that the minimum necessary strength of adhesion to the transparent glass substrate 1 may not be able to be achieved.

The first layer 11 and the second layer 12 can be formed by firing a mixture of inorganic pigment powder and glass powder. Specifically, these layers can be formed, for example, by preparing a paste containing inorganic pigment powder, glass powder, a resin binder, and a solvent, applying the paste, and then firing it. An example of the method for applying the paste that can be used is screen printing.

In the screen printing, the dense regions 11b of the first layer 11 can be formed, for example, using a print pattern in which 100 lines per Inch are formed. Each line is formed by Interconnected dots.

The first layer 11 and the second layer 12 are preferably porous. By making these layers porous, the first layer 11 and the second layer 12 become less likely to be peeled off from the transparent glass substrate 1 even when the transparent glass substrate 1 is repeatedly heated and cooled by cooking or other means to change the temperature of the transparent glass substrate 1. In order to make the first layer 11 and the second layer 12 porous, the proportion of the glass powder to the inorganic pigment only has to be decreased.

The first coating layer 14 and the second coating layer 15 can be formed of, for example, a thermally resistant coating film below.

The thermally resistant coating film preferably contains inorganic pigment powder and a resin binder. In such a thermally resistant coating film, the inorganic pigment powder is preferably dispersed in the resin binder. Because the thermally resistant coating film is for shielding light, the inorganic pigment powder is preferably a colored inorganic pigment. The preferred resin binder to be used is a thermally resistant resin and, for example, a silicone resin can be used as the resin binder.

The content of the inorganic pigment in the thermally resistant coating film is preferably within a range of 20% by mass to 80% by mass and more preferably within a range of 30% by mass to 70% by mass. Therefore, the content of the resin binder in the thermally resistant coating film is preferably within a range of 20% by mass to 80% by mass and more preferably within a range of 30% by mass to 70% by mass. If the content of the Inorganic pigment in the thermally resistant coating film is too small, the hideability required for the thermally resistant coating film may not be able to be achieved. On the other hand, if the content of the inorganic pigment is too large, the adhesion to the design layer 13 may decrease.

The thickness of the thermally resistant coating film is preferably within a range of 2 to 15 µm and more preferably within a range of 3 to 10 µm. If the thickness of the thermally resistant coating film is too small, the hideability required for the thermally resistant coating film may not be able to be achieved. If the thickness of the thermally resistant coating film is too large, the difference in coefficient of thermal expansion between the thermally resistant coating film and the design layer 13 may cause peeling of the thermally resistant coating film from the design layer 13.

The thermally resistant coating film can be formed, for example, by preparing a paste containing inorganic pigment powder, a resin binder, and a solvent, applying the paste, and then drying it. An example of the method for applying the paste that can be used is screen printing.

### (Second Embodiment)

Although in this embodiment the first layer 11 and the second layer 12 are each formed of a coating film containing an inorganic pigment and glass, the present embodiment is not limited to this. For example, the first layer 11 and the second layer 12 may be each formed of the above-described thermally resistant coating film. Although in this embodiment the first coating layer 14 and the second coating layer 15 are each formed of a thermally resistant coating film, the present embodiment is not limited to this. For example, the first coating layer 14 and the second coating layer 15 may be each formed of, like the first layer 11 and the second layer 12, a coating film containing an inorganic pigment and glass.

Fig. 3 is a photograph showing the wood grain pattern of the heat-resistant glass according to the first embodiment. As shown in Fig. 3 a wood grain pattern with depth and texture, which could not be achieved by conventional top plates for cookers, can be formed.

### (Second Embodiment not according to the present invention)

Fig. 4 is a schematic cross-sectional view showing a heat-resistant glass according to a second embodiment. The heat-resistant glass 20 according to this embodiment includes a transparent glass substrate 1 and a design layer 23 provided on one principal surface la of both the principal surfaces of the transparent glass substrate 1. The design layer 23 includes a first layer 21 provided on the one principal surface 1a of the transparent glass substrate 1 and a second layer 22 provided to cover the first layer 21. The design layer 23 has a pattern visible when viewed through the other principal surface 1b of the transparent glass substrate 1 and the pattern is a wood grain pattern like the first embodiment. The wood grain pattern in this embodiment is a darker-shade wood grain pattern than in the first embodiment. Therefore, the first layer 21 in this embodiment has a darker color shade than the first layer 11 in the first embodiment and the second layer 22 in this embodiment has a darker color shade than the second layer 12 in the first embodiment. Also in this embodiment, the color of the second layer 22 selected is paler than that of the first layer 21. In this embodiment, the color difference ΔE between the first layer 21 and the second layer 22 is 13.6.

The first layer 21 and the second layer 12 in this embodiment can be formed in the same manner as in the first embodiment, except for the above.

In this embodiment, a coating layer 24 is provided on the design layer 23. Since in this embodiment a darker-shade wood grain pattern than in the first embodiment is selected as described above, the coating layer 24 is formed of a black thermally resistant coating film and constituted by a single layer. The coating layer 24 in this embodiment can be formed in the same manner as the thermally resistant coating film in the first embodiment.

Also in this embodiment, like the first embodiment, a wood grain pattern with depth and texture, which could not be achieved by conventional top plates for cookers, can be formed.

### (Third Embodiment)

Fig. 5 is a schematic cross-sectional view showing a heat-resistant glass according to a third embodiment of the present invention. The heat-resistant glass 30 according to this embodiment includes a transparent glass substrate 1 and a design layer 33 provided on one principal surface 1a of both the principal surfaces of the transparent glass substrate 1. The design layer 33 in-dudes a first layer 31 provided on the one principal surface 1a of the transparent glass substrate 1 and a second layer 32 provided to cover the first layer 31. The design layer 33 has a pattern visible when viewed through the other principal surface 1b of the transparent glass substrate 1. The pattern of the design layer 33 in this embodiment is a hairline pattern. The hairline pattern is a pattern as observed on the surface of a stainless steel (SUS) plate.

Fig. 6 is a plan view showing the hairline pattern of the first layer 31 in the third embodiment. As shown in Fig. 6, in the first layer 31, sparse regions 31a and dense regions 31b are formed according to the hairline pattern in this embodiment. In this embodiment, the sparse regions 31a are regions free from a film forming the first layer 31. Therefore, the sparse regions 31a in this embodiment are regions where the thickness of the film is substantially zero. On the other hand, the dense regions 31b in this embodiment are regions where the film forming the first layer 31 is provided.

The thickness of the film in the dense regions 31b is within a range of 1 to 15 µm and more preferably within a range of 3 to 10 µm. Within the above ranges, a pattern with depth and texture can be more easily formed. The width of the dense regions 31b (the width thereof in a direction perpendicular to both of a direction of film thickness and a direction of extension of hairlines) is within a range of 0.05 mm to 1 mm and more preferably within a range of 0.05 mm to 0.7 mm. Furthermore, as shown in Fig. 6, the pattern is preferably such that lines having different widths are arranged in the direction perpendicular to the direction of extension of hairlines. Thus, a hairline pattern with depth and texture can be more easily formed.

In this embodiment, the second layer 32 is provided uniformly to cover the whole of the first layer 31. Therefore, if the second layer 32 is formed of a coating film, it can be formed as a full-coating, so-called solid-color coating film. Since the sparse regions 31a of the first layer 31 are free from the film forming the first layer 31, the film of the second layer 32 can be seen directly. The thickness of the second layer 32 is within a range of 1 to 30 µm and more preferably within a range of 5 to 25 µm. Within the above ranges, a hairline pattern with depth and texture can be more easily formed.

Also in this embodiment, the color of the second layer 32 selected is preferably lighter than that of the first layer 31.

The first layer 31 and the second layer 32 in this embodiment are each formed of a thermally resistant coating film. The thermally resistant coating film in this embodiment can be formed in the same manner as the thermally resistant coating film in the first embodiment. The thermally resistant coating film in this embodiment contains an aluminum pigment, in order to give the coating film a metallic luster. In this embodiment, both the first layer 31 and the second layer 32 contain aluminum pigment. In order to make the color of the second layer 32 lighter than that of the first layer 31, the aluminum pigment contained in the second layer 32 is preferably a higher-brightness aluminum pigment than that contained in the first layer 31.

In the thermally resistant coating film in this embodiment, the content of the aluminum pigment is preferably within a range of 10% by mass to 70% by mass and more preferably within a range of 30% by mass to 50% by mass. If the content of the metallic pigment in the thermally resistant coating film is too small, the metallic luster may not be able to be sufficiently obtained. On the other hand, if the content of the inorganic pigment is too large, the adhesion to the design layer 33 may decrease.

In this embodiment, no coating layer for improving the hideability is provided on the design layer 33 because a sufficiently high hideability can be achieved by the design layer 33 only. However, a coating layer may be provided on the design layer 33 as needed.

Fig. 7 is a photograph showing the hairline pattern of the heat-resistant glass according to the third embodiment. As shown in Fig. 7, according to the present invention, a hairline pattern with depth and texture, which could not be achieved by conventional top plates for cookers, can be formed.

Although in each of the above embodiments the heat-resistant glass according to the present invention has been described as a heat-resistant glass for use in a top plate for a cooker, the use of the heat-resistant glass according to the present invention is not limited to this and the heat-resistant glass can also be used, for example, as a window glass for burning equipment, such as a stove or a fireplace.

### [Reference Signs List]

- 1: transparent glass substrate
- 1a: one principal surface
- 1b: the other principal surface
- 10: heat-resistant glass
- 11: first layer
- 11a: sparse region
- 11b: dense region
- 12: second layer
- 13: design layer
- 14: first coating layer
- 15: second coating layer
- 20: heat-resistant glass
- 21: first layer
- 22: second layer
- 23: design layer
- 24: coating layer
- 30: heat-resistant glass
- 31: first layer
- 31a: sparse region
- 31b: dense region
- 32: second layer
- 33: design layer

## Claims

1. A heat-resistant glass (30) for a top plate for a cooker, the heat-resistant glass (30) including a transparent glass substrate (1) and a design layer (33) provided on one (1a) of two principal surfaces (1a, 1b) of the transparent glass substrate (1), the design layer (33) having a pattern visible when viewed through the other principal surface (1b) of the transparent glass substrate (1),
the design layer (33) comprising:
a first layer (31) provided on the one principal surface (1a) of the transparent glass substrate (1) and having a sparse region (31a) and a dense region (11b; 31b) each formed according to the pattern; and
a second layer (32) provided uniformly to cover the whole of the first layer (31),
wherein the first layer (31) and the second layer ( 32) contain each an aluminium pigment dispersed in a resin binder,
wherein the pattern is a hairline pattern, the hairline pattern is a pattern as observed on the surface of a stainless steel plate,
and
wherein the width of the dense regions (31b) is within a range of 0.05 mm to 1 mm,
wherein the sparse regions (31a) are regions free from a film forming the first layer (31),
wherein the thickness of the film in the dense regions (31b) is within a range of 1 to 15 µm, and
wherein the thickness of the second layer (32) is within a range of 1 to 30 µm.

2. A top plate of a cooker, comprising the heat-resistant glass (30) according to claim 1.

3. Use of the heat-resistant glass (30) according to claim 1 as a top plate of a cooker.

## Patentansprüche

1. Hitzebeständiges Glas (30) für eine Oberplatte für einen Herd, das hitzebeständige Glas (30) enthaltend ein transparentes Glassubstrat (1) und eine Designschicht (33), die auf einer (1a) von zwei Hauptoberflächen (1a, 1b) des transparenten Glassubstrats (1) vorgesehen ist, wobei die Designschicht (33) ein Muster aufweist, das bei Betrachtung durch die andere Hauptoberfläche (1b) des transparenten Glassubstrats (1) sichtbar ist,
die Designschicht (33) umfassend:
eine erste Schicht (31), die auf der einen Hauptoberfläche (1a) des transparenten Glassubstrats (1) vorgesehen ist und einen spärlichen Bereich (31a) und einen dichten Bereich (11b; 31b) aufweist, die jeweils gemäß dem Muster ausgebildet sind, und
eine zweite Schicht (32), die gleichmäßig vorgesehen ist, so dass sie die gesamte erste Schicht (31) bedeckt,
wobei die erste Schicht (31) und die zweite Schicht (32) jeweils ein Aluminiumpigment enthalten, das in einem Harzbindemittel dispergiert ist,
wobei das Muster ein Haarlinienmuster ist, wobei das Haarlinienmuster ein Muster ist, wie es auf der Oberfläche einer Edelstahlplatte beobachtet wird,
und
wobei die Breite der dichten Bereiche (31b) im Bereich von 0,05 mm bis 1 mm liegt,
wobei die spärlichen Bereiche (31a) Bereiche sind, die frei von einem Film sind, der die erste Schicht (31) bildet,
wobei die Dicke des Films in den dichten Bereichen (31b) im Bereich von 1 bis 15 µm liegt, und
wobei die Dicke der zweiten Schicht (32) im Bereich von 1 bis 30 µm liegt.

2. Oberplatte eines Herdes, umfassend das hitzebeständige Glas (30) nach Anspruch 1.

3. Verwendung des hitzebeständigen Glases (30) nach Anspruch 1 als Oberplatte eines Herdes.

## Revendications

1. verre résistant à la chaleur (30) pour une plaque supérieure conçue pour une cuisinière, le verre résistant à la chaleur (30) comprenant un substrat en verre transparent (1) et une couche décorative (33) prévue sur l'une (1a) de deux surfaces principales (1a, 1b) du substrat en verre transparent (1), la couche décorative (33) ayant un motif visible quand il est vu à travers l'autre surface principale (1b) du substrat en verre transparent (1),
la couche décorative (33) comprenant :
une première couche (31) prévue sur l'une des surfaces principales (1a) du substrat en verre transparent (1) et ayant une région clairsemée (31a) et une région dense (11b ; 31b), chacune étant formée selon le motif ; et
une deuxième couche (32) prévue de façon uniforme pour couvrir la totalité de la première couche (31),
verre résistant à la chaleur dans lequel la première couche (31) et la deuxième couche (32) contiennent chacune un pigment d'aluminium dispersé dans un liant à base de résine, dans lequel le motif est un motif capillaire, le motif capillaire est un motif tel qu'observé à la surface d'une plaque d'acier inoxydable,
et dans lequel les régions denses (31b) ont une largeur allant de 0,05 mm à 1 mm, dans lequel les régions clairsemées (31a) sont des régions exemptes de film formant la première couche (31), dans lequel l'épaisseur du film dans les régions denses (31b) se situe dans une plage allant de 1 à 15 µm, et dans lequel l'épaisseur de la deuxième couche (32) se situe dans une plage allant de 1 à 30 µm.

2. plaque supérieure d'une cuisinière, ladite plaque supérieure comprenant le verre résistant à la chaleur (30) selon la revendication 1.

3. Utilisation du verre résistant à la chaleur (30) selon la revendication 1, comme plaque supérieure d'une cuisinière.
